Europäisches Patentamt

European Patent Office

Office européen des brevets

(19)

(11) Veröffentlichungsnummer: **0 419 716 A1**

# (12) EUROPÄISCHE PATENTANMELDUNG

(21) Anmeldenummer: 89118052.3

(22) Anmeldetag: 29.09.89

(51) Int. Cl.5: **G08C 23/00, B23Q 1/00**

(43) Veröffentlichungstag der Anmeldung:
**03.04.91 Patentblatt 91/14**

(84) Benannte Vertragsstaaten:
**DE FR GB IT**

(71) Anmelder: **Paul Forkardt GmbH & Co. KG
Rosenstrasse 44-46
W-4000 Düsseldorf 30(DE)**

(72) Erfinder: **Steinberger, Josef
Sebastiansweg 30**

**W-4000 Düsseldorf 1(DE)**

Erfinder: **Kaleja, Bodo, Dipl.-Ing.
Hölender Weg 44
W-4030 Ratingen 6(DE)**

(74) Vertreter: **Patentanwälte Dipl.-Ing. Alex
Stenger Dipl.-Ing. Wolfram Watzke Dipl.-Ing.
Heinz J. Ring
Kaiser-Friedrich-Ring 70
W-4000 Düsseldorf 11(DE)**

(54) Verfahren zur berührungslosen Übertragung von in einem rotierenden Bauteil gemessenen physikalischen Grössen.

(57) Die Erfindung betrifft ein Verfahren zur berührungslosen Übertragung von in einem rotierenden Bauteil (3) gemessenen physikalischen Größen, die von einem Sensor (10) erfaßt und in elektrische Werte umgewandelt werden, wobei der Sensor (10) über ein den Luftspalt zwischen rotierendem und feststehendem Bauteil überbrückendes Induktionsspulenpaar (15a,15b) mit Energie versorgt wird und ein weiteres Induktionsspulenpaar (16a,16b) zur Übertragung der elektrischen Werte vorgesehen ist. Die vom Sensor (10) abgegebenen Meßwerte werden unmittelbar in ein Stromsignal gewandelt, das im rotierenden Bauteil (3) als analoges Signal über zwei Meßleitungen (13) zur Sendespule (16a) des Induktionsspulenpaares (16a,16b) geführt und unmittelbar vor der Übertragung digitalisiert und seriell vom rotierenden auf das feststehende Bauteil übertragen wird. Die über das zweite Induktionsspulenpaar (15a,15b) in das rotierende Bauteil übertragene Energie wird über dieselben Meßleitungen (13) dem Sensor (10) in einem definierten Bereich zugeführt, der außerhalb des Meßwertübertragungsbereiches liegt.

Figur 1

## VERFAHREN ZUR BERÜHRUNGSLOSEN ÜBERTRAGUNG VON IN EINEM ROTIERENDEN BAUTEIL GEMESSENEN PHYSIKALISCHEN GRÖSSEN

Die Erfindung betrifft ein Verfahren zur berührungslosen Übertragung von in einem rotierenden Bauteil, vorzugsweise einem an der Spindel einer Werkzeugmaschine angeordneten Spannzeug gemessenen physikalischen Größen, die von einem Sensor erfaßt und in elektrische Werte umgewandelt werden, wobei der Sensor über ein den Luftspalt zwischen rotierendem und feststehendem Bauteil überbrückendes Induktionsspulenpaar mit Energie versorgt wird und ein weiteres Induktionsspulenpaar zur Übertragung der elektrischen Werte vorgesehen ist.

Ein derartiges Verfahren zur berührungslosen Übertragung von in einem rotierenden Spannzeug gemessenen physikalischen Größen ist aus der EP-A-108 857 bekannt. Dieses bekannte Verfahren hat jedoch den Nachteil, daß die vom Sensor erfaßten physikalischen Größen analog übertragen werden, so daß unvermeidbare Störeinflüsse im Betrieb die Genauigkeit der erfaßten Daten sehr stark verringern können; außerdem ist ein hoher baulicher Aufwand für die Signalerfassung und -übertragung erforderlich.

Der Erfindung liegt die Aufgabe zugrunde, ein Verfahren der eingangs beschriebenen Art zur berührungslosen Übertragung von in einem rotierenden Bauteil gemessenen physikalischen Größen zu schaffen, das bei minimalem Bauaufwand exakte Meßergebnisse liefert.

Die Lösung dieser Aufgabenstellung durch die Erfindung ist dadurch gekennzeichnet, daß die vom Sensor abgegebenen Meßwerte unmittelbar in ein Stromsignal gewandelt werden, das im rotierenden Bauteil als analoges Signal über zwei Meßleitungen zur Sendespule des Induktionsspulenpaares geführt und unmittelbar vor der Übertragung digitalisiert und seriell vom rotierenden auf das feststehende Bauteil übertragen wird, und daß die über das zweite Induktionsspulenpaar in das rotierende Bauteil übertragene Energie über dieselben Meßleitungen dem Sensor in einem definierten Bereich zugeführt wird, der außerhalb des Meßwertübertragungsbereiches liegt.

Durch den erfindungsgemäßen Vorschlag ergibt sich der Vorteil, daß nur zwei Leitungen einerseits für die Meßwertübertragung und andererseits für die Energiezufuhr für jeden Sensor benötigt werden und daß hierbei unabhängig von der jeweils benötigten Leitungslänge die Störeinflüsse deshalb vernachlässigbar klein werden, weil anstelle von Spannungswerten Strom durch die Leitung fließt.

Um über ein einziges Induktionsspulenpaar sämtliche Meßwerte einer Mehrzahl von Sensoren an das feststehende Bauteil übertragen zu können und über ein weiteres Induktionsspulenpaar allen Sensoren Energie zuzuführen, wird in Weiterbildung der Erfindung vorgeschlagen, mehrere Sensoren über jeweils einen Umsetzer und zwei Leitungen und über einen Meßstellenumschalter an einen Analog-Digital-Wandler anzuschließen. Hierbei kann erfindungsgemäß zusätzlich zu den Meßwerten mehrerer Sensoren ein Synchronisationssignal und ein Erkennungssignal innerhalb eines seriellen Meßwertprotokolls übertragen werden, so daß über das Erkennungssignal die Art und Größe der Sensoren bzw. des rotierenden Bauteils erkannt werden können.

Mit der Erfindung wird schließlich vorgeschlagen, die Versorgungsspannung der Meßstellen im rotierenden Bauteil von einem Spulennetzteil zu regeln, das über ein drittes Induktionsspulenpaar mit dem Meßwerterfassungssystem verbunden ist, so daß die Versorgungsspannung für die gesamte Elektronik im rotierenden Bauteil in jedem Fall konstant gehalten wird.

Auf der Zeichnung ist ein Ausführungsbeispiel zur Erläuterung des erfindungsgemäßen Verfahrens dargestellt, und zwar zeigen:

Fig. 1 eine schematische Schnittdarstellung eines an der Spindel einer Werkzeugmaschine angeordneten Spannzeuges mit den zur Durchführung des erfindungsgemäßen Verfahrens erforderlichen Bauteilen,

Fig. 2 einen elektrischen Funktionsplan des im Spannzeug angeordneten Meßwerterfassungssystems,

Fig. 3 einen elektrischen Funktionsplan des in einem feststehenden Schaltschrank angeordneten Meßwertempfangssystems und

Fig. 4 einen elektrischen Funktionsplan für die Regelung des Spulennetzteils.

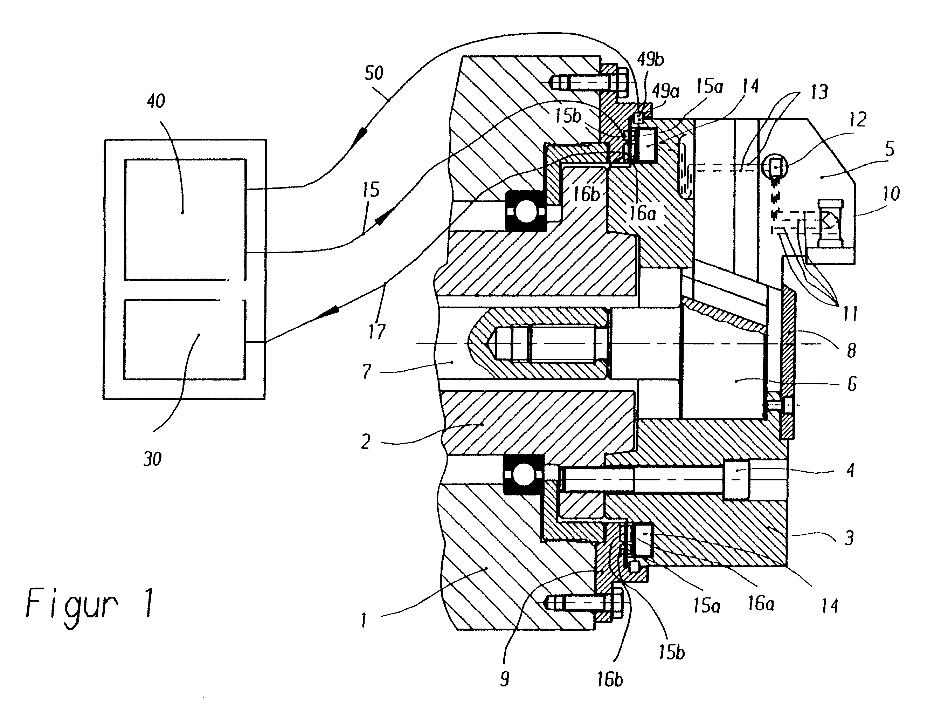

Die Fig.1 zeigt schematisch eine in einem Spindelkasten 1 einer im übrigen nicht dargestellten Werkzeugmaschine drehbar gelagerte Spindel 2, an deren vorderem Flansch ein Spannzeug 3 mittels Schrauben 4 befestigt ist. Dieses Spannzeug 3 besitzt eine Mehrzahl von Spannbacken 5, von denen auf der schematischen Zeichnung lediglich eine Spannbacke 5 dargestellt ist. Diese Spannbacke 5 ist in radialer Richtung beweglich im Futterkörper des Spannzeuges 3 gelagert und wird von einem Futterkolben 6 betätigt, der in axialer Richtung beweglich im Futterkörper des Spannzeuges 3 angeordnet und von einer Zugstange 7 angetrieben ist. Die Vorderseite des Spannzeuges 3 ist durch einen Deckel 8 verschlossen. An der Stirnseite des Spindelkastens 1 ist ein feststehender Übertragungsring 9 angeordnet, der mit dem sich mit der Spindel 2 drehenden Spannzeug 3 einen definierten Luftspalt bildet.

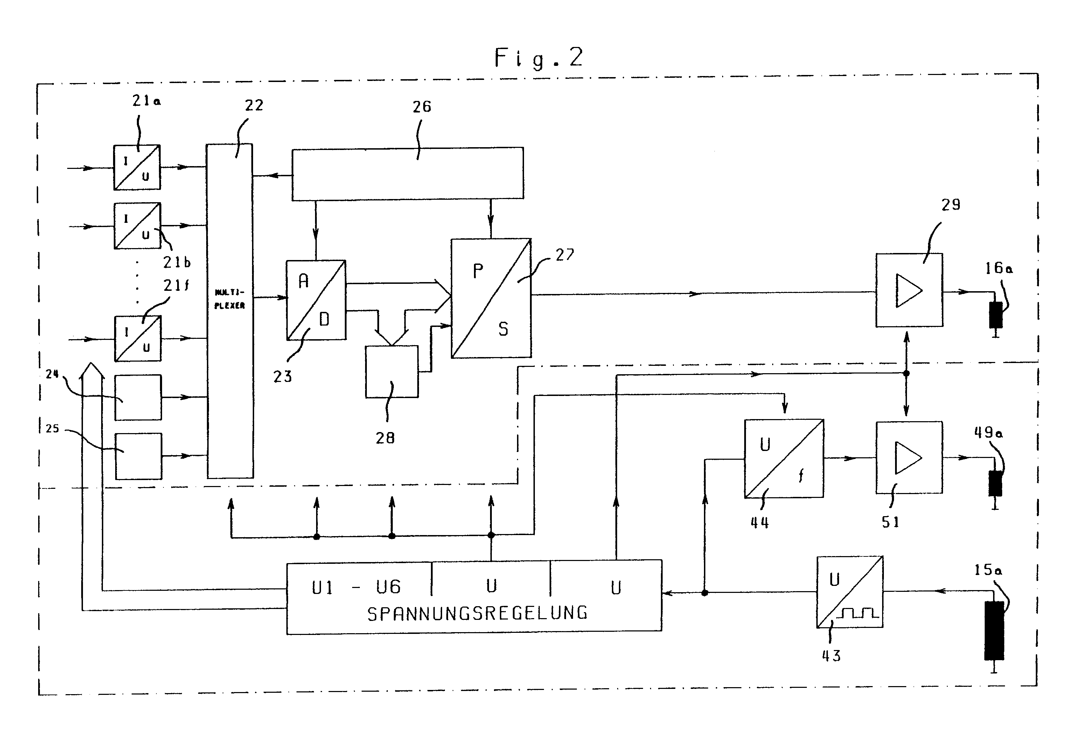

Im Spannzeug 3 ist eine Mehrzahl von Meßwertaufnehmern zur Erfassung von physikalischen Größen beim Betrieb des Spannzeuges angeordnet. Beim Ausführungsbeispiel nach Fig.1 ist der besseren Übersichtlichkeit wegen lediglich ein Sensor 10 zu erkennen, der zur Messung der von der Spannbacke 5 auf das jeweils eingespannte Werkstück aufgebrachten Spannkraft dient. Der Sensor 10 steht über Leitungen 11 mit einem Meßwertumsetzer 12 in Verbindung, der wiederum über zwei Übertragungsleitungen 13 mit einem Meßwerterfassungssystem 14 verbunden ist, das im einzelnen in Fig.2 dargestellt ist.

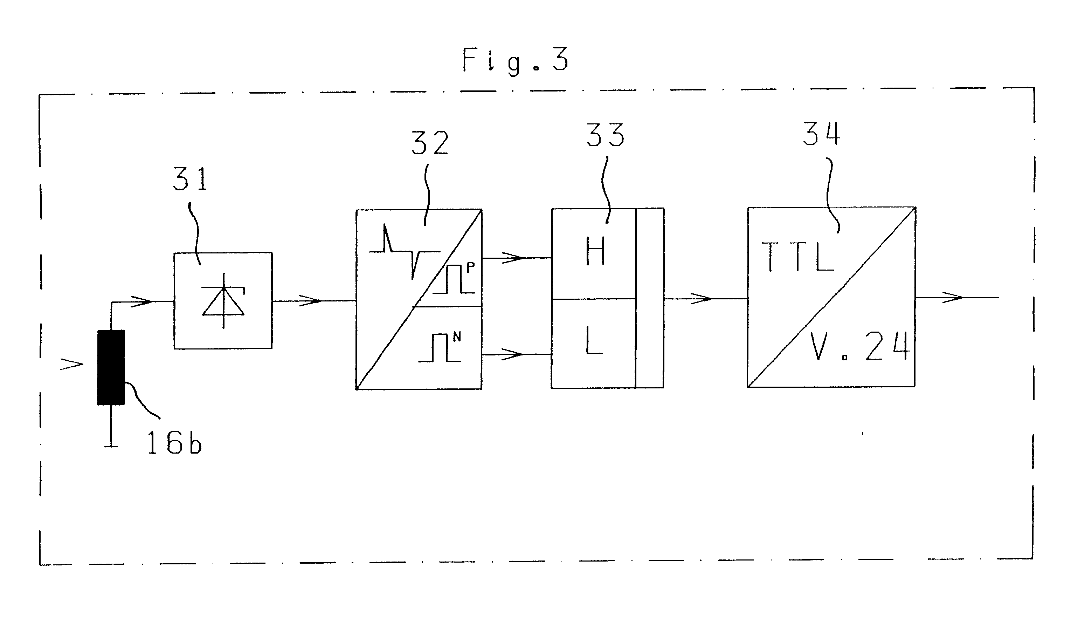

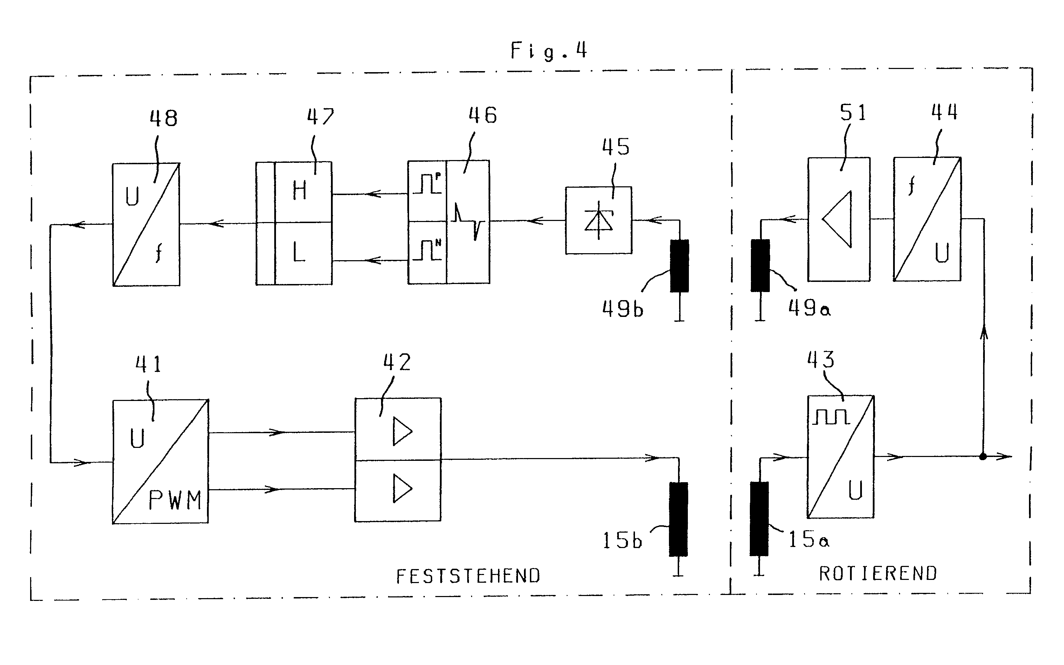

Das im rotierenden Spannzeug 3 angeordnete Meßwerterfassungssystem 14 steht über zwei Induktionsspulenpaare 15a,15b bzw. 16a,16b berührungslos mit dem Übertragungsring 9 in Verbindung. Die Empfangsspule 16b des Induktionsspulenpaares 16a,16b ist hierbei mittels einer Übertragungsleitung 17 mit einem Meßwertempfangssystem 30 verbunden, das im einzelnen in Fig.3 dargestellt ist. Die Sendespule 15b des anderen Induktionsspulenpaares 15a,15b ist über eine Übertragungsleitung 18 mit einem Spulennetzteil 40 verbunden, das wiederum in seinen Einzelheiten in Fig.4 dargestellt ist.

Die vom Sensor 10 erfaßte physikalische Größe, im Ausführungsbeispiel die jeweilige Spannkraft, wird in eine elektrische Größe umgewandelt und über die Leitungen 11 dem Meßwertumsetzer 12 zugeführt. Die Aufgabe des Meßwertumsetzers 12 besteht einmal darin, das Meßsignal zu empfangen und in ein Stromsignal zu wandeln, und zum anderen darin, den Sensor 10 mit der notwendigen Energie zu versorgen. Hierdurch wird der Vorteil erreicht, daß nur zwei Übertragungsleitungen 13 vom Meßwertumsetzer 12 zum Meßwerterfassungssystem 14 benötigt werden, obwohl durch diese zwei Übertragungsleitungen 13 die Versorgung des Sensors 10 mit Energie und gleichzeitig in umgekehrter Richtung die Signalübertragung erfolgt. Das Meßwerterfassungssystem 14 ist in Fig.2 detailliert dargestellt.

Bei dem in Fig.2 dargestellten Ausführungsbeispiel wird davon ausgegangen, daß insgesamt sechs Sensoren 10 im Spannzeug 3 vorhanden sind, die jeweils über einen Meßwertumsetzer 12 an das Meßwerterfassungssystem 14 angeschlossen sind. Die von den Meßwertumsetzern 12 kommenden Stromsignale werden jeweils durch einen Strom-Spannungs-Umsetzer 21a - 21f in Spannungen umgeformt, die auf einen Multiplexer 22 gelegt werden. Dieser Multiplexer 22 ist mit einem Analog-Digital-Umsetzer 23 verbunden. Der Multiplexer 22 arbeitet wie ein Schalter, der entsprechend seiner Ansteuerung den jeweiligen Meßkanal zum Analog-Digital-Umsetzer 23 durchschaltet. Der Multiplexer 22 ist beim Ausführungsbeispiel in der Lage, insgesamt acht Signale zu verarbeiten, wovon sechs als Meßsignale benutzt werden. An die zwei weiteren Anschlüsse des Multiplexers 22 wird einmal eine Synchronisation 24 und zum anderen eine Systemerkennung 25 angeschlossen.

Die Synchronisation 24 hat die Aufgabe, ein eindeutiges Signal zu erzeugen, das jedem Datenübertragungsblock vorangestellt wird. Dieses Signal liegt weder im Bereich der Systemkennung, noch im Bereich der Daten. Dadurch ist es der nachgeschalteten Empfangselektronik im feststehenden Teil möglich, den Beginn eines Übertragungsblokkes, bestehend aus einem Synchronisations-, einem Systemkennungs- und sechs Meßsignalen, zu erkennen und entsprechend zu reagieren.

Die Systemerkennung 25 hat die Aufgabe, ein Signal zu erzeugen, daß weder im Synchronisations- noch im Datenbereich liegt. An diesem Signal kann die im feststehenden Teil der Anordnung nachgeschaltete Auswerteelektronik erkennen, welches System an der Maschine angebaut ist. Es kann sich hierbei beispielsweise um eine Kennung des jeweiligen Spannzeuges 3 handeln.

Der interne Ablauf des Meßwerterfassungssystems 14 wird durch eine Takterzeugung 26 gesteuert, die sowohl mit dem Multiplexer 22 als auch mit dem Analog-Digital-Umsetzer 23 und einem Parallel-Seriell-Umsetzer 27 verbunden ist. Der Analog-Digital-Umsetzer 23 wandelt die angeschaltete Spannung in einen Digitalwert um, der auf einen Paritätsgenerator 28 gegeben wird, der ein Paritätsbit erzeugt. Dieses Paritätsbit wird dem vom Analog-Digital-Umsetzer 23 erzeugten Digitalwort zugeordnet und mit diesem übertragen. Es bietet auf der Empfängerseite die Möglichkeit, Übertragungsfehler zu erkennen und entsprechend darauf zu reagieren. Die Zusammensetzung des Meßwertes und des Paritätsbits erfolgt im Parallel-Seriell-Umsetzer 27. Diese Schaltung hat die Aufgabe, das parallel angelegte Datenwort in eine serielle Bitfolge umzusetzen. Dem Parallel-Seriell-Umsetzer 27 ist ein Spulentreiber 29 nachgeschaltet, der die Sendeleistung so weit verstärkt, daß die Übertragung von der rotierenden Sendespule 16a auf die feststehende Empfangsspule 16b des Induktionsspulenpaares 16a,16b gewährleistet ist.

Die voranstehend beschriebene Meßwertübertragung ist unabhängig von der Drehzahl, so daß eine kontinuierliche Übertragung von Stillstand bis maximaler Drehzahl gewährleistet ist, die beispielsweise 10000 Umdrehungen pro Minute betragen kann. Insbesondere bei Spannzeugen ist eine derartige kontinuierliche Meßwertübertragung erforderlich, da die Prozeßgröße, beispielsweise die Spannkraft, zu jeder Zeit gemessen und eventuell beeinflußt werden muß. Das hierfür verwendete berührungslose Übertragungsverfahren mit Induktionsspulen schließt Probleme, wie beispielsweise Abrieb oder Verschleißerscheinungen von kontaktbehafteten Übertragungsverfahren aus. Die vom Spulentreiber 29 kommenden Signale werden induktiv über die Sendespule 16a im rotierenden Teil der Einrichtung zur Empfangsspule 16b im feststehenden Teil der Anordnung übertragen. Von dieser Empfangsspule 16b werden die Meßsignale über die Übertragungsleitung 17 dem stationären Meßwertempfangssystem 30 aufgegeben, das in Fig.3 dargestellt ist.

Aufgabe dieses Meßwertempfangssystems 30 ist es, die von den Sensoren 10 aufgenommenen Meßwerte zu empfangen und zu interpretieren. Durch die Übertragung der Meßsignale über die Induktionsspulen 16a und 16b wird das Signal in seiner Form verändert. Die nachgeschalteten Elemente des Meßwertempfangssystems 30 haben die Aufgabe das Signal wieder in seine reine Form aufzubereiten. Dies geht wie folgt vor sich:

Die in der Empfangsspule 16b induzierten Spannungen werden durch eine Schutzbeschaltung 31 in ihrer Amplitude begrenzt. Mit der nachfolgenden Schaltung 32 werden die positiven und negativen Flanken ausgefiltert und in einen entsprechenden Logikpegel umgeformt. Mit diesen Flankensignalen wird ein Flip-Flop entweder gesetzt oder zurückgesetzt. Am Ausgang des Flip-Flop 33 kann das gesendete Binärsignal abgenommen werden. Es entspricht in Form und Pegel den zuvor im rotierenden Teil der Einrichtung gesendeten Daten. Für die weitere Verarbeitung durch beispielsweise einen Digitalrechner oder ein digitales Regelsystem wird das Binärsignal in einer weiteren Schaltung 34 umgewandelt.

Die Elektronik zur Speisung der gesamten Schaltung ist in Fig.4 durch das Spulennetzteil 40 dargestellt. Aufgabe der in Fig.4 dargestellten Elektronik ist es, die zur Funktion der Meßwertumsetzer 12 und des Meßwerterfassungssystems 14 notwendige Energie in den rotierenden Teil der Einrichtung, d.h. in das Spannzeug 3 einzuspeisen.

Diese Leistungsübertragung muß so erfolgen, daß die den im rotierenden Teil befindlichen Sensoren 10 zugeführte Spannung weitgehend konstant ist. Diese Spannung wird beeinflußt durch die Anzahl der Sensoren 10 und durch die Größe des anliegenden Meßwertes am jeweiligen Sensor 10. Falls nur ein Sensor 10 vorhanden ist, könnten die durch den Sensor 10 und den Meßwert verursachten Schwankungen toleriert werden. Da jedoch mehrere Sensoren 10 an das Meßwerterfassungssystem 14 angeschlossen sind und durch die Energieübertragung über Induktionsspulen 15a,15b eine sehr weiche Kopplung gegeben ist, ist es notwendig, den im rotierenden Teil der Einrichtung erzeugten Istwert der Betriebsspannung zu erfassen und diesen unabhängig vom Meßwerterfassungssystem 14 auf den stationären Teil zu übertragen, um ihn dort einem Regler zuzuführen. Dieser Regler beeinflußt die an die Sendespule 15b herangeführte Leistung derart, daß die Betriebsspannung im rotierenden Teil belastungsunabhängig ist und dadurch konstant gehalten wird.

Um diese Übertragung zu ermöglichen, muß die im rotierenden Teil vorliegende Gleichspannung zuvor in eine Frequenz umgewandelt werden, um diese dann über die Induktionsspulen 15a,15b übertragen zu können. In einer entsprechenden Elektronik wird diese Frequenz dann wieder in eine analoge Gleichspannung zurückgewandelt.

Im Spulennetzteil 40 gemäß Fig.4 wird in einem Impulsweitengenerator 41 eine gepulste Spannung fester Frequenz erzeugt, die an einen Leistungsverstärker 42 und von hier über die Sendespule 15b induktiv in die im rotierenden Teil befindliche Empfangsspule 15a übertragen wird. Danach wird die induzierte Spannung in einer Komponente 43 gleichgerichtet und geglättet. Die entstandene Gleichspannung dient zur Versorgung der Elektronik im rotierenden Teil.

Wie bereits voranstehend beschrieben ist diese Spannung stark lastabhängig. Ihr Ist-Wert wird in einem Bauteil 44 erfaßt und in eine äquivalente Frequenz umgewandelt. Diese Frequenz wird über einen Spulentreiber 51 und ein nachgeschaltetes Induktionsspulenpaar 49a,49b vom rotierenden in den feststehenden Teil induktiv übertragen. Von der Empfangsspule 49b gelangt die Information über eine Leitung 50 und eine Schutzbeschaltung 45 auf eine Flankenerkennungsschaltung 46 und weiter auf eine Pegelanpassung 47. Danach wird das wiedergewonnene Signal in einer Schaltung 48 von einer Frequenz in eine Gleichspannung umgewandelt. Diese Gleichspannung wird als Ist-Wert dem Impulsweitengenerator 41 zugeführt, der die Impulsweite so verändert, daß die Versorgungsspannung für die gesamte Elektronik im rotierenden Teil konstant gehalten wird.

Das voranstehend beschriebene Verfahren hat den Vorteil, daß keine analogen Spannungen, die stark von Betriebsstörungen beeinflußt sind, übertragen werden, sondern digitalisierte und in Dualzahlen vorliegende Meßwerte. Diese sind weitgehend störungsunabhängig durch induktive Einstreuungen aus dem Betrieb. Sie sind darüber hinaus sehr genau in der Übertragungsgröße und qualitativ analogen Übertragungssystemen überlegen. Neben der hohen Störsicherheit ist das beschriebene Verfahren unabhängig von der Drehzahl des rotierenden Bauteils, da eine hohe Übertragungsrate durch die im rotierenden Bauteil eingebaute Elektronik ermöglicht wird. Diese hohe Übertragungsrate ist notwendig, um regelungstechnische Schritte zur Beeinflussung der Ist-Werte vornehmen zu können. Außerdem erlaubt das Verfahren, die elektronischen Baugruppen sehr klein zu gestalten, so daß es möglich ist, die Meßwertumsetzer 12 unmittelbar in der Nähe des jeweiligen Sensors 10 unterzubringen und selbst das Meßwerterfassungssystem 14 im rotierenden Teil anzuordnen. Das Verfahren ist in der Lage, mehrere Meßsignale aus dem rotierenden Bauteil zu übertragen, wobei es sich beispielsweise um Kräfte, Dehnungen, Drücke und Temperaturen handeln kann. Da die Übertragung digital erfolgt, können über ein einziges Induktionsspulenpaar 16a,16b mehrere Signale übertragen werden.

**Bezugszeichenliste:**

1 Spindelkasten
2 Spindel
3 Spannzeug
4 Schraube
5 Spannbacke
6 Futterkolben
7 Zugstange
8 Deckel
9 Übertragungsring
10 Sensor
11 Leitung
12 Meßwertumsetzer
13 Übertragungsleitung
14 Meßwerterfassungssystem
15a Induktionsspule
15b Induktionsspule
16a Induktionsspule
16b Induktionsspule
17 Übertragungsleitung
18 Übertragungsleitung
21 Strom-Spannungs-Umsetzer
22 Multiplexer
23 Analog-Digital-Umsetzer
24 Synchronisation
25 Systemerkennung
26 Takterzeugung
27 Parallel-Seriell-Umsetzer
28 Paritätsgenerator
29 Spulentreiber
30 Meßwertempfangssystem
31 Schutzbeschaltung
32 Schaltung
33 Flip-Flop
40 Spulennetzteil
41 Impulsweitengenerator
42 Leistungsverstärker
43 Komponente
44 Bauteil
45 Schutzbeschaltung
46 Flankenerkennungsschaltung

47 Regelanpassung
48 Schaltung
49a Induktionsspule
49b Induktionsspule
50 Leitung
51 Spulentreiber

**Ansprüche**

1. Verfahren zur berührungslosen Übertragung von in einem rotierenden Bauteil, vorzugsweise einem an der Spindel (2) einer Werkzeugmaschine angeordneten Spannzeug (3) gemessenen physikalischen Größen, die von einem Sensor (10) erfaßt und in elektrische Werte umgewandelt werden, wobei der Sensor (10) über ein den Luftspalt zwischen rotierendem und feststehendem Bauteil überbrückendes Induktionsspulenpaar (15a,15b) mit Energie versorgt wird und ein weiteres Induktionsspulenpaar (16a,16b) zur Übertragung der elektrischen Werte vorgesehen ist,
**dadurch gekennzeichnet,**
daß die vom Sensor (10) abgegebenen Meßwerte unmittelbar in ein Stromsignal gewandelt werden, das im rotierenden Bauteil als analoges Signal über zwei Meßleitungen (13) zur Sendespule (16a) des Induktionsspulenpaares (16a,16b) geführt und unmittelbar vor der Übertragung digitalisiert und seriell vom rotierenden auf das feststehende Bauteil übertragen wird, und daß die über das zweite Induktionsspulenpaar (15a,15b) in das rotierende Bauteil übertragene Energie über dieselben Meßleitungen (13) dem Sensor (10) in einem definierten Bereich zugeführt wird, der außerhalb des Meßwertübertragungsbereiches liegt.
2. Verfahren nach Anspruch 1, dadurch gekennzeichnet, daß mehrere Sensoren (10) über jeweils einen Meßwertumsetzer (12) und zwei Leitungen (13) und über ein Meßwerterfassungssystem (14) an einen Analog-Digital-Wandler (23) angeschlossen sind.
3. Verfahren nach Anspruch 1 und 2, dadurch gekennzeichnet, daß zusätzlich zu den Meßwerten mehrerer Sensoren (10) ein Synchronisationssignal und ein Erkennungssignal innerhalb eines seriellen Meßwertprotokolls übertragen werden.
4. Verfahren nach mindestens einem der Ansprüche 1 bis 3, dadurch gekennzeichnet, daß die Versorgungsspannung der Meßstellen im rotierenden Bauteil von einem Spulennetzteil (40) geregelt wird, das über ein drittes Induktionsspulenpaar (49a,49b) mit dem Meßwerterfassungssystem (14) verbunden ist.

Figur 1

EP 0 419 716 A1

Fig.2

EP 0 419 716 A1

Fig. 3

Fig. 4

FESTSTEHEND

ROTIEREND

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-2 932 173 (HITACHI) <br> * Ansprüche 1,2,4,9 * <br> --- | 1,2,4 | G 08 C 23/00 <br> B 23 Q 1/00 |
| A | FR-A-2 440 042 (NORD) <br> * Anspruch 4 * <br> --- | 1 | |
| A | EP-A-0 211 212 (PRÜFTECHNIK) <br> * Anspruch 1 * <br> --- | 3 | |
| A | DE-A-3 428 861 (LINK) <br> ----- | | |

**RECHERCHIERTE SACHGEBIETE (Int. Cl.5)**

G 08 C
B 23 Q

Der vorliegende Recherchenbericht wurde für alle Patentansprüche erstellt

| Recherchenort | Abschlußdatum der Recherche | Prüfer |
|---|---|---|
| DEN HAAG | 06-06-1990 | DE GUSSEM J.L. |